# EUROPÄISCHE PATENTSCHRIFT

(11) **EP 2 701 556 B1**
(45) Veröffentlichungstag und Bekanntmachung des Hinweises auf die Patenterteilung: **06.04.2016**
(21) Anmeldenummer: 12810144.1
(22) Anmeldetag: 07.12.2012
(51) Int. Cl.: A47C 7/62

(54) **HALTEVORRICHTUNG**
HOLDINGDEVICE
DISPOSITIF POUR TENIR

(30) Priorität: 27.01.2012 DE 202012100283 U
(43) Veröffentlichungstag der Anmeldung: 05.03.2014
(73) Patentinhaber: DW-Spritzgiesstechnik Dieter Wandelt Inhaber Ulrich Koch E.K., 58553 Halver (DE)
(72) Erfinder: KOCH, Ulrich, 58553 Halver (DE)
(74) Vertreter: Patentanwälte Dörner & Kötter PartG mbB
(86) Internationale Anmeldenummer: PCT/EP2012/074817
(87) Internationale Veröffentlichungsnummer: WO 2013/110392

(56) Entgegenhaltungen:
- US-A- 4 541 137
- US-A- 4 993 126
- US-A1- 2011 025 107

## Beschreibung

Die Erfindung betrifft eine Vorrichtung zum Halten von Handtüchern oder dergleichen an Sitzgelegenheiten, bestehend aus einem Basisteil, das von einem Auflageschenkel und einem Klemmschenkel gebildet ist, die über einen Steg miteinander verbunden sind, wobei an dem Klemmschenkel ein Ausleger angeordnet ist, an dem ein Klemmhaken vorgesehen ist.

Vorrichtungen der eingangs genannten Art dienen zur Befestigung von Handtüchern, Badetüchern, Sitzauflagen usw. auf Sitzmöbeln, bei denen es sich vorzugsweise um Liegestühle, Sonnenliegen oder dergleichen handelt. Solche Vorrichtungen sind beispielsweise aus der US 2011/025107 A1 und US 4 993 126 A bekannt. Sie sollen verhindern, dass die Handtücher oder Auflagen durch Wind herunterfallen oder beim Hinsetzen beziehungsweise Hinlegen aus ihrer Ursprungsposition verrutschen.

Aus der DE 91 10 227 U1 ist ein Liegestuhl bekannt, bei dem Klemmelemente vorgesehen sind, die auf Querholme des Liegestuhls aufgesteckt werden. Zur Befestigung der Handtücher werden diese über den Querholm gelegt, sodass nach Aufstecken der Klemmelemente das Handtuch zwischen Holm und Klemmelement fixiert ist.

Das bekannte Klemmelement erfüllt die an es gestellten Anforderungen. Allerdings ist nachteilig, dass das Tuch unter dem Klemmelement angeordnet ist und somit das Tuch von dem Klemmelementen teilweise überdeckt ist. Zudem ist eine Anpassung an unterschiedliche Geometrien der Sitzgelegenheiten nicht vorgesehen und auch die Handhabung, insbesondere beim Lösen der Klemmelemente, nicht benutzerfreundlich. Hier will die Erfindung Abhilfe schaffen. Der Erfindung liegt die Aufgabe zugrunde, eine Vorrichtung zum Hatten von Handtüchern oder dergleichen an Sitzgelegenheiten zu schaffen, die einfach zu bedienen ist und gleichzeitig zuverlässig die Tücher an den Sitzgelegenheiten klemmt. Gemäß der Erfindung wird diese Aufgabe dadurch gelöst, dass der Ausleger zwei Abschnitte aufweist und der Abschnitt in einem Bogen endet, an den sich der Klemmhaken anschließt und dass der Klemmschenkel, die Abschnitte gemeinsam mit dem Klemmhaken eine schlaufenartige Form ausbilden.

Mit der Erfindung ist eine Vorrichtung zum Halten von Handtüchern oder dergleichen an Sitzgelegenheiten geschaffen, welche eine zuverlässige Klemmung der Tücher an der Sitzgelegenheit hervorruft. Dies ist durch den Ausleger, an dem der Klemmhaken vorgesehen ist, bewerkstelligt, da der Ausleger eine Spannung hervorruft, die im Zusammenwirken mit dem Haken eine hohe Klemmkraft ausübt. Somit ist gewährleistet, dass das Handtuch nicht aus seiner vorgesehenen Position verrutscht, und zwar weder durch Einfluss von Wind noch beim Platznehmen auf der jeweiligen Sitzgelegenheit. Zudem ermöglicht die Form einerseits eine gute Handhabbarkeit, andererseits weist die Vorrichtung dadurch keine hervorstehenden Teile auf, weshalb die Verletzungsgefahr, beispielsweise im Falle einer aufrecht gestellten Lehne des jeweiligen Sitzmöbels, an der die Vorrichtung geklemmt gehalten ist, deutlich reduziert ist. Auch ist das Mitführen der Vorrichtung, beispielsweise in einer Hosentasche, verbessert.

In Weiterbildung der Erfindung ist der Ausleger schwenkbar an dem Klemmschenkel angeordnet. Durch die schwenkbare Anordnung ist die Möglichkeit geschaffen, den Haken aus seiner Klemmposition in eine geöffnete Position zu bewegen, sodass das Einfädeln des Handtuchs in die Vorrichtung problemlos möglich ist. Hierdurch ist der Bedienkomfort der Vorrichtung zusätzlich erhöht.

Zur Verbesserung der Beweglichkeit des Auslegers ist an dem Anlenkpunkt des Auslegers an dem Klemmschenkel eine Materialverjüngung ausgebildet.

Vorteilhaft ist der Klemmhaken schwenkbar an dem Ausleger vorgesehen. Durch diese weitere Möglichkeit zum Schwenken des Hakens ist eine weitere Verbesserung der Bedienbarkeit der Vorrichtung hervorgerufen, da eine zusätzliche Bewegungsrichtung geschaffen ist.

Zur Verbesserung der Beweglichkeit des Klemmhakens ist am Anlenkpunkt des Klemmhakens eine Materialschwächung ausgebildet.

In vorteilhafter Weiterbildung der Erfindung ist der Klemmhaken mit einer Öffnungstaste versehen. Die Öffnungstaste verbessert zusätzlich die Benutzerfreundlichkeit der erfindungsgemäßen Vorrichtung, da durch Ausüben eines Drucks auf die Öffnungstaste das Einfädeln des Handtuchs bzw. die Klemmung des Handtuchs auflösbar ist.

Zur weiteren Verbesserung der Handhabbarkeit ist die Öffnungstaste mit einer Oberflächenstruktur ausgestattet. Auf diese Weise ist ein Abrutschen von der Taste bei deren Betätigung verhindert.

In anderer Weiterbildung der Erfindung korrespondiert der Klemmhaken mit einer Aufnahme in dem Klemmschenkel. Diese Ausbildung führt zu einer Arretierung des Klemmhakens in der Klemmposition des Handtuchs, sodass diese Position ausschließlich bei absichtlicher Betätigung des Klemmhakens verlassen werden kann, wodurch die Zuverlässigkeit der Klemmung zusätzlich erhöht ist.

Bevorzugt ist der Klemmschenkel mit einem Radius versehen. Der Radius bietet die Möglichkeit, eine zuverlässige Klemmung der Vorrichtung auch an einer Sitzgelegenheit zu ermöglichen, die von einem Rohrgestell gebildet ist. Der Radius bietet die Möglichkeit der bereichsweisen Aufnahme eines solchen Rohres und der zuverlässigen Anordnung.

Die Anordnung der Vorrichtung an einer Sitzgelegenheit, die von einer Hohllehne gebildet ist, ist dadurch verbessert, dass der Klemmschenkel einen Haken aufweist. Der Haken ist dazu geeignet, sich an der Hohllehne zu verkrallen und somit eine zuverlässige Anordnung der Vorrichtung zu gewährleisten.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:
- Fig. 1: die perspektivische Darstellung einer Vorrichtung zum Halten von Handtüchern oder dergleichen an Sitzgelegenheiten in geschlossenem Zustand;
- Fig. 2: die Ansicht einer Vorrichtung zum Halten von Handtüchern oder dergleichen an Sitzgelegenheiten in einer zusätzlichen Ausgestaltung in geschlossenem Zustand.

Die als Ausführungsbeispiel gewählten Vorrichtungen zum Halten von Handtüchern oder dergleichen an Sitzgelegenheiten bestehen vorzugsweise aus Polypropylen, Polycarbonat, Polyoxymethylen oder Polyethylen mit hoher Dichte. Sie werden im Spritzgießverfahren hergestellt. Die Vorrichtungen bestehen aus einem Basisteil 1, welches von einem Auflageschenkel 2 und einem Klemmschenkel 3 gebildet ist, die über einen Steg 4 miteinander verbunden sind. An dem Klemmschenkel 3 ist ein Ausleger 5 angeordnet, an dessen freien Ende ein Klemmhaken 6 vorgesehen ist.

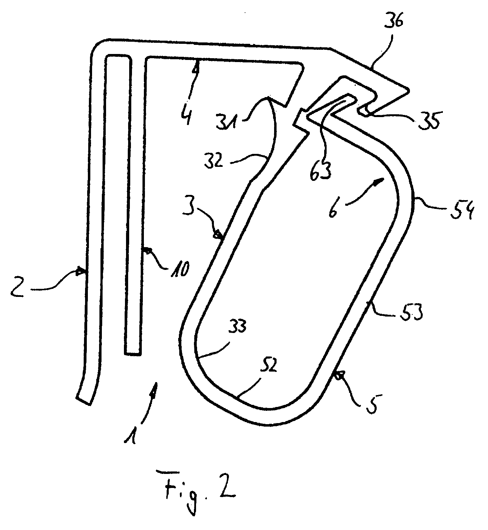

Der Auflageschenkel 2 ist als im Wesentlichen gerade ausgerichtetes Flächenelement ausgebildet. An seinem einen Ende ist im Wesentlichen rechtwinklig der Steg 4 angeordnet. An dem dem Auflageschenkel 2 abgewandten Ende des Steges 4 ist der Klemmschenkel 3 unter einem Winkel von maximal als 90° vorgesehen. Im Ausführungsbeispiel nach Figur 2 ist die Vorrichtung mit einem parallel zum Auflageschenkel 2 ausgerichteten Halteschenkel 10 versehen, der an den Steg 4 angeformt ist.

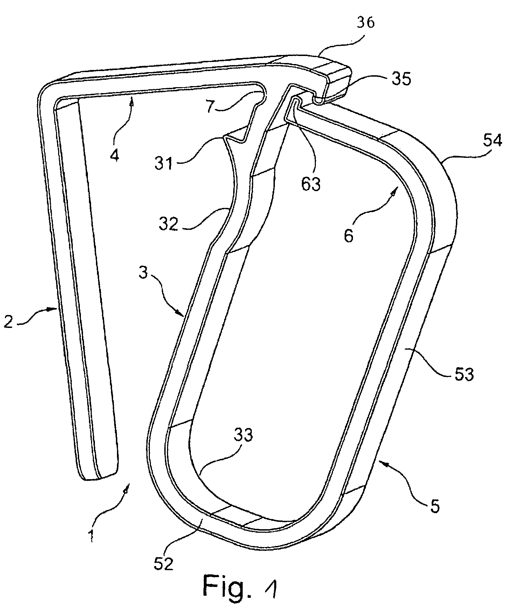

Am Übergang zwischen dem Steg 4 und dem Klemmschenkel 3 ist im Ausführungsbeispiel nach Figur 1 eine Materialschwächung 7 vorgesehen, die die Beweglichkeit des Klemmschenkels 3 an dem Steg 4 verbessert. Beabstandet zu der Materialschwächung 7 weist der Klemmschenkel 3 auf seiner dem Auflageschenkel 2 zugewandten (Innen-) Seite einen Haken 31 auf. Unmittelbar benachbart zu dem Haken 31 ist der Klemmschenkel 3 auf der Innenseite mit einem Radius 32 versehen. An seinem dem Steg 4 abgewandten Ende weist der Klemmschenkel 3 einen Bogen 33 auf, der in die dem Auflageschenkel 2 abgewandte Richtung weist. Im Ausführungsbeispiel ist an dem dem Bogen 33 abgewandten Ende dagegen ein Vorsprung 36 vorgesehen, der ein hakenförmiges freies Ende 35 aufweist.

Der Bogen 33 geht nahtlos über in den Ausleger 5, der einen gerundeten Abschnitt 52 und einen sich daran anschließenden und zum Klemmschenkel 3 im Wesentlichen parallel ausgerichteten Abschnitt 53 aufweist. Der Abschnitt 53 endet in einem Bogen 54, an den sich nahtlos der Klemmhaken 6 anschließt. Der Klemmhaken 6 ist im Wesentlichen rechtwinklig zum Abschnitt 53 ausgerichtet und weist an seinem Ende eine Nase 63 auf. Wie in den Figuren 4 und 5 zu erkennen, bilden der Klemmschenkel 3, die Abschnitte 52 und 53 gemeinsam mit dem Klemmhaken 6 eine schlaufenartige Form aus.

Bei der Benutzung der erfindungsgemäßen Vorrichtung wird diese aus ihrer Ruheposition, wie sie in Figur 1 dargestellt ist, auf die Lehne einer Sitzgelegenheit aufgeschoben, so dass der Auflageschenkel 2 auf der Vorderseite der Lehne, der Klemmschenkel 3 auf der Rückseite der Lehne der jeweiligen Sitzgelegenheit angeordnet ist. Im Ausführungsbeispiel nach Figur 2 wird anstelle des Auflageschenkels 2 der Halteschenkel 10 auf der Vorderseite der Lehne positioniert. In seiner endgültigen Position kommt der Steg 4 zur Anlage mit dem oberen Ende der Lehne der Sitzgelegenheit. In diesem Zustand ist die Lehne von dem Basisteil 1 der erfindungsgemäßen Vorrichtung bereichsweise übergriffen. Das Aufschieben des Basisteils 1 wird durch den Bogen 33 am freien Ende des Klemmschenkels 3 erleichtert, der ein Verkanten wirksam verhindert.

Bei Benutzung der Vorrichtung an einer Sitzgelegenheit, welche eine Lehne mit Hohlelementen aufweist, führt der Eingriff des Hakens 31 in eines der Elemente der Hohllehne zu deren Verkrallen, so dass ein versehentliches Abziehen der Vorrichtung von der Lehne wirksam verhindert ist. Besteht die Sitzgelegenheit aus einer Rohrkonstruktion, bietet der Radius 32 an dem Klemmschenkel 3 die Möglichkeit, sich an einem an der Lehne vorgesehenen Rohrabschnitt abzustützen. Da der Rohrabschnitt dann bereichsweise in den Radius 32 eintaucht, ist auch in diesem Fall ein versehentliches Abziehen der Vorrichtung von der Lehne wirksam verhindert. Die im Ruhezustand erkennbare nicht-parallele Ausrichtung des Klemmschenkels 3 zum Auflageschenkel 2 führt beim Aufschieben der Vorrichtung auf die Lehne der Sitzgelegenheit zu einer Spreizung, sodass der Klemmschenkel dazu neigt, in seine ursprüngliche Ausgangsposition zurückzufahren. Hierdurch wird eine Vorspannung erzeugt, die die Ausübung einer Klemmkraft auf die Lehne zur Folge hat, so dass die Klemmwirkung der Vorrichtung zusätzlich erhöht ist.

Ist die Vorrichtung auf der Lehne angeordnet, erfolgt die Anordnung des jeweiligen Handtuchs.

Im Ausführungsbeispiel nach den Figuren 1 und 2 wird nach dem Einführen des Handtuchs die auf den Klemmhaken 6 ausgeübte Kraft reduziert, so dass sich der Klemmhaken 6 in Richtung seiner Ausgangsposition bewegt. Das Handtuch ist dann zwischen der Nase 63 und dem hakenförmigen Ende 35 geklemmt gehalten, wodurch ein Verrutschen oder ein Herunterfallen des Handtuchs bei Wind verhindert ist. Die Vorrichtung nach den Figuren 1 und 2 zeichnet sich insbesondere dadurch aus, dass sie keine abstehenden Teile aufweist, was durch die schlaufenförmige Gestaltung aus dem Klemmschenkel 3, den Abschnitten 52 und 53 sowie dem Klemmhaken 6 hervorgerufen ist. Dadurch ist die Verletzungsgefahr, beispielsweise im Falle einer aufrecht gestellten Lehne des jeweiligen Sitzmöbels, an der die Vorrichtung geklemmt gehalten ist, deutlich reduziert.

Die Vorrichtung nach der Erfindung bietet die Möglichkeit einer Anbringung an den verschiedensten Sitzgelegenheiten. So dient der Haken 31 der Befestigung der Vorrichtung an einer Sitzgelegenheit, die von Hohlprofilen gebildet ist, wohingegen der Radius 32 zur Anbringung an Sitzgelegenheiten mit Rundprofilen dient. Die Befestigung an massiv ausgebildeten Sitzgelegenheiten ist durch die Klemmung zwischen dem Klemmschenkel 3 und dem Auflageschenkel 2 beziehungsweise im Ausführungsbeispiel nach Figur 2 dem Halteschenkel 10 möglich. Für mit Tuch bespannte Sitzgelegenheiten ist die Klemmung zwischen dem Auflageschenkel 2 und dem Halteschenkel 10 vorgesehen. Es ist somit eine Vorrichtung zum Halten von Handtüchern oder dergleichen geschaffen, die an allen bekannten Sitzgelegenheiten anbringbar ist und das Handtuch zuverlässig hält.

Mit der erfindungsgemäßen Vorrichtung ist eine erhebliche Verbesserung sowohl der Handhabung als auch der Klemmwirkung hervorgerufen. Die Handhabung ist zum einen dadurch verbessert, dass aufgrund des Bogens 33 das Aufschieben auf die Lehne vereinfacht ist. Darüber hinaus ist aufgrund der Klemmkraft, die der Klemmschenkel 3 auf die Lehne ausübt sowie der an den Klemmschenkel 3 vorgesehenen Haltemittel in Form des Hakens 31 und des Radius 32 eine verbesserte Anpassung an die jeweiligen Gegebenheiten der Lehne hervorgerufen. Hinzu kommt, dass aufgrund des Vorsehens eines Tasters die Bedienung erleichtert ist. Da im Gegensatz zu den aus dem Stand der Technik bekannten Halteelementen die Klemmung des Handtuches außerhalb des Basisteils 1 erfolgt und nicht zwischen Lehne und Halteelement, ist bei Ausüben einer Kraft auf das Handtuch zudem die Klemmwirkung erhöht, was die Zuverlässigkeit der Vorrichtung verbessert. Darüber hinaus ist insgesamt die Ausgestaltung der Vorrichtung optisch und haptisch ansprechend. Dies ist unter anderem dadurch hervorgerufen, dass die gesamte Vorrichtung mit gebrochenen Kanten versehen ist. Durch die glattflächige Ausgestaltung, insbesondere des Auflageschenkels 2 sowie des Klemmhakens 6 besteht zudem die Möglichkeit, auf der jeweiligen Ansichtsseite Werbung anzubringen, so dass auch eine wirtschaftliche Nutzung der Vorrichtung als Werbeträger oder als Giveaway zur Verbesserung der Vermarktungsmöglichkeiten der Vorrichtung möglich ist.

bewegen. Das Ende 62 wird dabei in die Aufnahme 34 auf der Außenseite des Klemmschenkels 3 eingeführt, wie dies in Figur 3 dargestellt ist. Das Handtuch ist in dieser Position in der Aufnahme 34 von dem Ende 62 des Klemmhakens 6 geklemmt gehalten. Hierdurch ist ein Verrutschen oder ein Herunterfallen des Handtuchs bei Wind verhindert. Hinzu kommt, dass das Ausüben einer Kraft auf das Handtuch, beispielsweise für den Fall, dass der Benutzer auf der Sitzgelegenheit Platz nimmt, eine Zugrichtung des Handtuchs in Richtung der dem freien Ende der Lehne abgewandten Seite zur Folge hat. Dies wiederum bewirkt, dass im Bereich der Aufnahme 34 eine Zugbewegung um das Ende 62 des Klemmhakens 6 herum erfolgen soll. Daraus folgt jedoch, dass der Klemmhaken 6 mit seinem freien Ende 62 in Richtung der dem Bogen 33 abgewandten Seite der Aufnahme 34 bewegt wird, so dass die auf das Handtuch ausgeübte Klemmkraft durch die Bewegung des freien Endes 62 des Klemmhakens 6 verstärkt wird. Folglich ist auch verhindert, dass beim Platz nehmen das Handtuch versehentlich von der Lehne abrutscht.

Im Ausführungsbeispiel nach den Figuren 4 und 5 wird nach dem Einführen des Handtuchs die auf den Klemmhaken 6 ausgeübte Kraft reduziert, so dass sich der Klemmhaken 6 in Richtung seiner Ausgangsposition bewegt. Das Handtuch ist dann zwischen der Nase 63 und dem hakenförmigen Ende 35 geklemmt gehalten, wodurch ein Verrutschen oder ein Herunterfallen des Handtuchs bei Wind verhindert ist. Die Vorrichtung nach den Figuren 4 und 5 zeichnet sich insbesondere dadurch aus, dass sie keine abstehenden Teile aufweist, was durch die schlaufenförmige Gestaltung aus dem Klemmschenkel 3, den Abschnitten 52 und 53 sowie dem Klemmhaken 6 hervorgerufen ist. Dadurch ist die Verletzungsgefahr, beispielsweise im Falle einer aufrecht gestellten Lehne des jeweiligen Sitzmöbels, an der die Vorrichtung geklemmt gehalten ist, deutlich reduziert.

Die Vorrichtung nach der Erfindung bietet die Möglichkeit einer Anbringung an den verschiedensten Sitzgelegenheiten. So dient der Haken 31 der Befestigung der Vorrichtung an einer Sitzgelegenheit, die von Hohlprofilen gebildet ist, wohingegen der Radius 32 zur Anbringung an Sitzgelegenheiten mit Rundprofilen dient. Die Befestigung an massiv ausgebildeten Sitzgelegenheiten ist durch die Klemmung zwischen dem Klemmschenkel 3 und dem Auflageschenkel 2 beziehungsweise im Ausführungsbeispiel nach Figur 5 dem Halteschenkel 10 möglich. Für mit Tuch bespannte Sitzgelegenheiten ist die Klemmung zwischen dem Auflageschenkel 2 und dem Halteschenkel 10 vorgesehen. Es ist somit eine Vorrichtung zum Halten von Handtüchern oder dergleichen geschaffen, die an allen bekannten Sitzgelegenheiten anbringbar ist und das Handtuch zuverlässig hält.

Mit der erfindungsgemäßen Vorrichtung ist eine erhebliche Verbesserung sowohl der Handhabung als auch der Klemmwirkung hervorgerufen. Die Handhabung ist zum einen dadurch verbessert, dass aufgrund des Bogens 33 das Aufschieben auf die Lehne vereinfacht ist. Darüber hinaus ist aufgrund der Klemmkraft, die der Klemmschenkel 3 auf die Lehne ausübt sowie der an den Klemmschenkel 3 vorgesehenen Haltemittel in Form des Hakens 31 und des Radius 32 eine verbesserte Anpassung an die jeweiligen Gegebenheiten der Lehne hervorgerufen. Hinzu kommt, dass aufgrund des Vorsehens eines Tasters die Bedienung erleichtert ist. Da im Gegensatz zu den aus dem Stand der Technik bekannten Halteelementen die Klemmung des Handtuches außerhalb des Basisteils 1 erfolgt und nicht zwischen Lehne und Halteelement, ist bei Ausüben einer Kraft auf das Handtuch zudem die Klemmwirkung erhöht, was die Zuverlässigkeit der Vorrichtung verbessert. Darüber hinaus ist insgesamt die Ausgestaltung der Vorrichtung optisch und haptisch ansprechend. Dies ist unter anderem dadurch hervorgerufen, dass die gesamte Vorrichtung mit gebrochenen Kanten versehen ist. Durch die glattflächige Ausgestaltung, insbesondere des Auflageschenkels 2 sowie des Klemmhakens 6 besteht zudem die Möglichkeit, auf der jeweiligen Ansichtsseite Werbung anzubringen, so dass auch eine wirtschaftliche Nutzung der Vorrichtung als Werbeträger oder als Giveaway zur Verbesserung der Vermarktungsmöglichkeiten der Vorrichtung möglich ist.

## Patentansprüche

1. Vorrichtung zum Halten von Handtüchern oder dergleichen an Sitzgelegenheiten, bestehend aus einem Basisteil (1), das von einem Auflageschenkel (2) und einem Klemmschenkel (3) gebildet ist, die über einen Steg (4) miteinander verbunden sind, wobei an dem Klemmschenkel (3) ein Ausleger (5) angeordnet ist, an dem ein Klemmhaken (6) vorgesehen ist, **dadurch gekennzeichnet, dass** der Ausleger (5) zwei Abschnitte (52, 53) aufweist und der Abschnitt (53) in einem Bogen (54) endet, an den sich der Klemmhaken (6) anschließt und dass der Klemmschenkel (3), die Abschnitte (52, 53) gemeinsam mit dem Klemmhaken (6) eine schlaufenartige Form ausbilden.

2. Vorrichtung nach Anspruch 1, **dadurch gekennzeichnet, dass** der Ausleger (5) schwenkbar an dem Klemmschenkel (3) angeordnet ist.

3. Vorrichtung nach Anspruch 1 oder 2, **dadurch gekennzeichnet, dass** an dem Anlenkpunkt des Auslegers (5) an dem Klemmschenkel (3) eine Materialverjüngung (8) ausgebildet ist.

4. Vorrichtung nach einem oder mehreren der vorgenannten Ansprüche, **dadurch gekennzeichnet, dass** der Klemmhaken (6) schwenkbar an dem Ausleger (5) vorgesehen ist.

5. Vorrichtung nach einem oder mehreren der vorgenannten Ansprüche, **dadurch gekennzeichnet, dass** an dem Anlenkpunkt des Klemmhakens (6) an dem Ausleger (5) eine Materialschwächung (9) ausgebildet ist.

6. Vorrichtung nach einem oder mehreren der vorgenannten Ansprüche, **dadurch gekennzeichnet, dass** der Klemmhaken (6) mit einer Öffnungstaste (61) versehen ist.

7. Vorrichtung nach Anspruch 6, **dadurch gekennzeichnet, dass** die Öffnungstaste (61) mit einer Oberflächenstruktur ausgestattet ist.

8. Vorrichtung nach einem oder mehreren der vorgenannten Ansprüche, **dadurch gekennzeichnet, dass** der Klemmhaken (6) mit einer Aufnahme (34) in dem Klemmschenkel (3) korrespondiert.

9. Vorrichtung nach einem oder mehreren der vorgenannten Ansprüche, **dadurch gekennzeichnet, dass** der Klemmschenkel (3) mit einem Radius (32) versehen ist.

10. Vorrichtung nach einem oder mehreren der vorgenannten Ansprüche, **dadurch gekennzeichnet, dass** der Klemmschenkel (3) einen Haken (31) aufweist.

## Claims

1. Device for holding towels or the like on seats, comprising a base part (1) which is formed by a support leg (2) and a clamping leg (3), which are joined to one another by a web (4) whereat an extension arm (5) is arranged on the clamping leg (3), on which extension arm (5) a clamping hook (6) is provided **characterised in that** the extension arm (5) has two sections (52, 53) and the section (53) ends in a curve (54) which the clamping hook (6) adjoins and that the clamping leg (3), together with sections (52, 53) and the clamping hook (6) all form a loop-like shape.

2. Device in accordance with claim 1, **characterised in that** the extension arm (5) is arranged to pivot on the clamping leg (3).

3. Device in accordance with claim 1 or claim 2, **characterised in that** a taper (8) is formed in the material at the point where the extension arm (5) joins the clamping leg (3).

4. Device in accordance with any one or several of the aforementioned claims, **characterised in that** the clamping hook (6) is arranged to pivot on the extension arm (5).

5. Device in accordance with any one or several of the aforementioned claims, **characterised in that** a constriction (9) is formed in the material at the point of junction between the clamping hook (6) and the extension arm (5).

6. Device in accordance with any one or several of the aforementioned claims, **characterised in that** the clamping hook (6) has an opening button (61).

7. Device in accordance with claim 6, **characterised in that** the surface of the opening button (61) is structured.

8. Device in accordance with any one or several of the aforementioned claims, **characterised in that** the clamping hook (6) fits into a seat (34) in the clamping leg (3).

9. Device in accordance with any one or several of the aforementioned claims, **characterised in that** the clamping leg (3) has a radius (32).

10. Device in accordance with any one or several of the aforementioned claims, **characterised in that** the clamping leg (3) has a hook (31).

## Revendications

1. Dispositif pour tenir des serviettes ou similaires contre des sièges, comprenant une pièce de base (1) formée par une branche d'appui (2) et une brande de bridage (3) reliées entre elles via une tige (4), sachant que contre la branche de bridage (3) est agencé un bras (5) contre lequel est prévu un crochet de bridage (6), **caractérisé en ce que** le bras (5) présente deux segments (52, 53) et que le segment (53) se termine par un coude (54) auquel le crochet de bridage (6) se raccorde, et **en ce que** la branche de bridage (3) et les segments (52, 53) conjointement au crochet (6) ont la forme d'une boucle.

2. Dispositif selon la revendication 1, **caractérisé en ce que** le bras (5) est agencé de façon à pivoter contre la branche de bridage (3).

3. Dispositif selon la revendication 1 ou 2, **caractérisé en ce qu'**un rétrécissement (8) du matériau a été ménagé contre le point d'articulation du bras (5) contre la branche de bridage (3).

4. Dispositif selon l'une ou plusieurs des revendications précédentes, **caractérisé en ce que** le crochet de bridage (6) est prévu pivotant contre le bras (5).

5. Dispositif selon l'une ou plusieurs des revendications précédentes, **caractérisé en ce qu'**est configurée une fragilisation (9) du matériau contre le point d'articulation du crochet de bridage (6) contre le bras (5).

6. Dispositif selon l'une ou plusieurs des revendications précédentes, **caractérisé en ce que** le crochet de bridage (6) est muni d'une touche d'ouverture (61).

7. Dispositif selon la revendication 6, **caractérisé en ce que** la couche d'ouverture (61) est dotée d'une structure superficielle.

8. Dispositif selon l'une ou plusieurs des revendications précédentes, **caractérisé en ce que** le crochet de bridage (6) épouse un réceptacle (34) dans la branche de bridage (3).

9. Dispositif selon l'une ou plusieurs des revendications précédentes, **caractérisé en ce que** la branche de bridage (3) présente un rayon (32).

10. Dispositif selon l'une ou plusieurs des revendications précédentes, **caractérisé en ce que** la branche de bridage présente un crochet (31).
